**Europäisches Patentamt**

**European Patent Office**

**Office européen des brevets**

(19)

(11) Veröffentlichungsnummer : **0 161 416**
**B1**

(12) # EUROPÄISCHE PATENTSCHRIFT

(45) Veröffentlichungstag der Patentschrift :
**15.06.88**

(51) Int. Cl.⁴ : **B 29 C 67/22**, B 29 C 67/12,
B 29 D 9/00, B 29 D 31/00

(21) Anmeldenummer : **85103063.5**

(22) Anmeldetag : **16.03.85**

(54) Verfahren zur Herstellung von hinterschäumten Formteilen.

(30) Priorität : 18.04.84 DE 3414794

(43) Veröffentlichungstag der Anmeldung :
21.11.85 Patentblatt 85/47

(45) Bekanntmachung des Hinweises auf die Patenterteilung : 15.06.88 Patentblatt 88/24

(84) Benannte Vertragsstaaten :
DE FR GB IT SE

(56) Entgegenhaltungen :
DE-A- 1 504 230
DE-A- 1 779 738
DE-A- 1 903 749
DE-A- 2 429 037
DE-A- 2 930 966

(73) Patentinhaber : METZELER SCHAUM GMBH
Donaustrasse 51
D-8940 Memmingen (DE)

(72) Erfinder : Wetzel, Hermann
Lessingstrasse 34
D-8940 Memmingen (DE)

(74) Vertreter : Seibert, Rudolf, Dipl.-Ing. et al
Tattenbachstrasse 9
D-8000 München 22 (DE)

**Beschreibung**

Die Erfindung betrifft ein Verfahren zur Herstellung von hinterschäumten Formteilen, wobei in eine Schäumform ein Oberflächenwerkstoff eingeformt und anschließend ein Schaumstoffreaktionsgemisch eingebracht wird.

Bei der Herstellung von Formkörpern, insbesondere von hinterschäumten Formteilen, wie sie beispielsweise für die Innenverkleidung von Kraftfahrzeugen Anwendung finden und bei denen die Anforderungen an Präzision und Optik im Bereich der Sicht- und Nutzoberfläche sehr hoch sind, treten bei den bekannten Herstellungsverfahren oftmals Randzonenstörungen in Form von Lufteinschlüssen oder Lunkern auf, die einen erhöhten Ausschuß- oder Reparaturanteil bedeuten. Dies gilt insbesondere für Formteile mit einer stark profilierten Oberfläche, d. h. Oberflächenbereichen, die als Umrandungen oder Wülste nach außen hervorragen.

Üblicherweise werden zur Herstellung derartiger Formteile ein entsprechender Oberflächenwerkstoff in Form eines getrennt erzeugten Vorformlings oder eines flächigen Gebildes, das mit Hilfe von Druckluft oder Vakuum geformt ist, in eine vorgegebene Schäumform eingelegt. Als Oberflächenwerkstoffe finden dabei im wesentlichen Folien aus modifiziertem Polystyrol wie z. B. ABS oder PVC sowie Polyolefinen oder aber auch Textilien oder Vliese Anwendung. Diese Folien können dabei in kompakter oder geschäumter Form mit oder ohne gesonderten Verstärkungen vorliegen. Nach Einlegen dieser Oberflächenwerkstoffe werden dann ggf. noch erforderliche Einlegeteile zur Verstärkung, Befestigung oder Krafteinleitung aus Kunststoff, Metall oder Glasfasergebilden eingebracht. Im nachfolgenden Arbeitsgang wird dann ein Polyurethanreaktionsgemisch in die offene oder geschlossene Schäumform eingegeben, woran sich der eigentliche Schäumvorgang anschließt. Dabei können diese Schaumstoffe in weicher, halbharter oder harter Einstellung verwendet werden.

Bei der Durchführung dieses bekannten Verfahrens können sich jedoch infolge nicht im voraus bestimmbarer Fließverhältnisse des Reaktionsgemisches Schaumstörungen in Form von Lunkern oder Lufteinschlüssen dicht unterhalb des in die Schäumform eingelegten Oberflächenwerkstoffes bilden, so daß sich Fehler z. B. in Form von Einfallstellen an der sichtbaren Oberfläche des Formteils ergeben.

Der Erfindung liegt daher die Aufgabe zugrunde, ein Verfahren zu schaffen, mit dem derartige Fehlerstellen weitgehend vermieden werden und mit dem es möglich ist, das gesamte Formteil und spezielle, insbesondere hervorstehende Abschnitte entsprechend den gegebenen Anforderungen gesondert auszugestalten.

Diese Aufgabe wird dadurch gelöst, daß auf die Rückseite des Oberflächenwerkstoffes an jenen Stellen, an denen sich schaumfreie Bereiche bilden könnten bzw. gebildet haben, zum Ausfüllen dieser Bereiche von der Rückseite her ein Polymer aufgebracht wird.

Das Aufbringen derartiger Polymere erfolgt also, z. B. mittels Sprüh-, Streich-, Gieß- oder Einlegverfahren, vor dem Einbringen des Schaumstoffreaktionsgemisches an gefährdeten Stellen vorbeugend.

In diese gesondert eingebrachten Polymere können dann zusätzliche Einleg- oder Verstärkungselemente direkt eingebracht und fixiert werden oder das Polymer ist mit einem feinteiligen Material gefüllt.

Alternativ bzw. erforderlichenfalls wird das Polymer erst nach Einbringen und Aufschäumen des Schaumstoffreaktionsgemisches durch die Schaumstoffschicht hindurch in schaumfreie Bereiche des Formteils injiziert, d. h. daß das Polymer praktisch nachträglich zur Ausbesserung von Fehlstellen verwendet wird.

Aus DE-A- 2 930 966 ist es zwar bekannt, hinterschäumte Oberflächenwerkstoffe an gewissen Stellen zur Schalldämmung bzw. Schalldämpfung mit Folienzuschnitten, welche ggf. mit viskoseelastischem Material getränkt sind, zu versehen. Es wäre jedoch reiner Zufall, wenn solche Stellen gleichzeitig Stellen entsprächen, an denen sich schaumfreie Bereiche bilden könnten.

Als Polymere können dabei thermoplastische Kunststoffe in gelöster, dispergierter, geschmolzener, kompakter oder aufgeschäumter Form aufgetragen werden. Dazu kommen beispielsweise folgende Stoffe in Frage : Polyvinylchlorid, lineare Polyurethane, Polyvinylacetat- und Alkohol, Polyolefine, modifizierte Polyolefine wie z. B. chlorsulfoniertes Polyethylen, Acrylate, lineare Polyester oder auch Polystyrol, vorzugsweise in modifizierter Form.

Neben thermoplastischen Kunststoffen eignen sich auch sogenannte Elastomere oder aber auch Duromere, also Reaktionskunststoffe. Hierzu seien als Beispiele für bevorzugte Anwendungen genannt : Epoxidharze, Polyester, Polyurethane oder Silicone.

Anhand einer schematischen Zeichnung sind in mehreren Ausführungsbeispielen nach dem neuen Verfahren behandelte Formteile rein schematisch dargestellt und nachstehend erläutert. Dabei zeigen :

Fig. 1 einen Längsschnitt durch ein Formteil in herkömmlicher Hinterschäumung mit einer Fehlstelle an einem vorspringenden Bereich,

Fig. 2 einen Längsschnitt durch das gleiche Teil mit Ausfüllen des gefährdeten Bereichs mit einem Polymer,

Fig. 3 ein Formteil mit einer partiellen Polymerausfüllung, in der eine Versteifungseinlage fixiert ist,

Fig. 4 ein Formteil mit mehreren spezifisch beanspruchten Bereichen, die gleichzeitig zur Abschirmung von vorspringenden Metallteilen dienen und

Fig. 5 ein fertig hinterschäumtes Formteil mit nachträglichem Ausfüllen einer Fehlstelle im Injektionsverfahren.

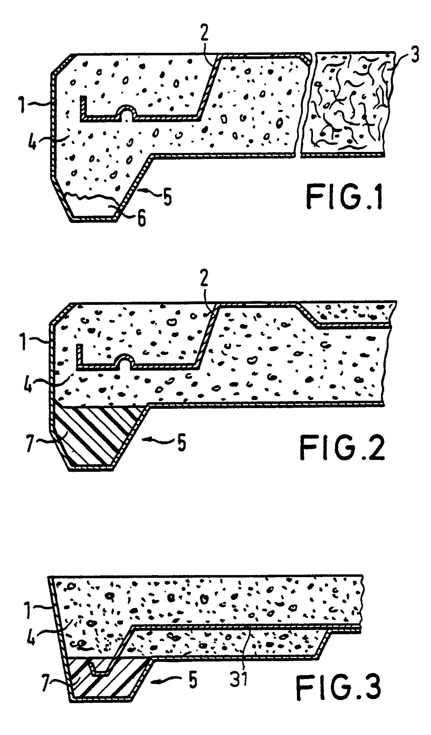

Wie aus dem Längsschnitt nach Fig. 1 zu ersehen ist, wird ein herkömmliches Formteil wie folgt gefertigt : Als Oberflächenwerkstoff 1 wird eine beispielsweise thermogeformte ABS-Folie in eine nicht näher dargestellte Stützform bzw. Schäumform eingebracht. Dabei können für diesen Oberflächenwerkstoff 1 aber auch andere flächige Gebilde verwendet und beispielsweise durch Druckluft oder Vakuum in die Schäumform eingeformt werden. Anschließend wird die Schäumform noch mit Verstärkungsmaterialien bestückt, die z. B. aus einem Metall- oder Kunststoffteil 2 und aus Faserwerkstoff 3 in loser Packung bestehen. Sodann wird ein Schaumstoffreaktionsgemisch eingebracht, das nach dem Aufschäumen den gesamten freien Bereich mit Schaumstoff 4 hinter dem Oberflächenwerkstoff 1 ausfüllen soll. Bei diesem Schäumvorgang können bei entsprechender Geometrie, z. B. innerhalb des Vorsprunges 5, Schaumstörungen in Form von Lufteinschlüssen oder Lunkern, also schaumfreie Bereiche 6 auftreten, die Einfallstellen an der sichtbaren Oberfläche des Formteils zur Folge haben, so daß dieses Teil dann praktisch Ausschuss darstellt.

Um derartige Fehlstellen von vornherein zu vermeiden, wird, wie in Fig. 2 dargestellt ist, gemäß dem neuen Verfahren der gefährdete Bereich 6 (Fig. 1), d. h. der Vorsprung 5, mit einem reaktiven PUR-Gießelastomer als Polymer 7 ausgefüllt. Damit werden beim nachfolgenden Schäumvorgang nur noch großvolumige Bereiche mit Schaumstoff 4 ausgefüllt, die praktisch keinerlei Ecken oder Vorsprünge 5 mehr aufweisen, so daß hierdurch die Gefahr von Fehlstellen 6 minimiert ist und ein Formteil mit einer optisch und technisch einwandfreien Oberfläche erhalten wird.

Wie sich aus Fig. 3 ergibt, ist es neben dem gezielten Ausfüllen möglicher Fehlstellen durch ein Polymer aber auch ggf. zusätzlich möglich, dieses Polymer zur Fixierung von Einlegeteilen 31 und Verstärkungselementen heranzuziehen. Nach dem Einbringen eines PUR-Reaktionsgemisches als Polymer 32 in den Vorsprung 33 wird noch während einer vorgegebenen Reaktionsphase ein entsprechendes Einlegeteil 31 aus Kunststoff oder Metall in das Polymer 32 eingebracht. Nach der anschließenden Aushärtung dieses Polymers 32 ist das Einlegeteil 31 fest fixiert und kann somit bei der darauffolgenden Bildung des Schaumstoffes 34 aus dem Schaumstoffreaktionsgemisch nicht mehr verrutschen.

Ein weiterer Vorteil dieser Durchführungsform des neuen Verfahrens besteht in der Berücksichtigung sicherheitstechnischer Aspekte z. B. für Kraftfahrzeug-Bauteile, da hiermit scharfkantige Metallteile so weit wirkungsvoll abgedeckt werden können, daß im Falle eines Unfalls die Verletzungsgefahr gemindert wird :

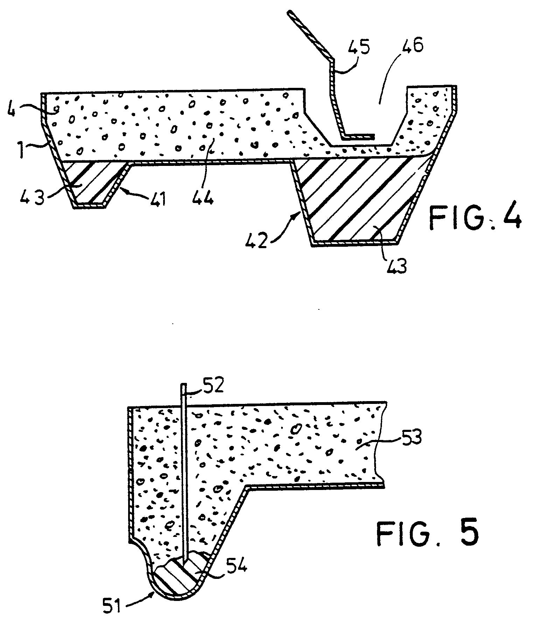

Gemäß Fig. 4 werden zwei Vorsprünge 41 und 42 mit einem Polymer 43 oder einem anderen energieabsorbierenden Werkstoff ausgefüllt und der verbleibende Bereich wird durch den sich aus dem mit dem anschließend eingebrachten Reaktionsgemisch bildenden Schaumstoff 44 eingenommen. Damit ist es durch entsprechende Materialwahl in den einzelnen Bereichen möglich, einen vorgegebenen Härteunterschied der Materialien in den Vorsprüngen 41 bzw. 42 zu dem Schaumstoff 44 zu erzeugen. Darüber hinaus ist das derartig aufgebaute Formteil als Abdeckteil für vorstehende Metallteile 45, die in entsprechende Ausnehmungen 46 des Formteils ragen, gestaltet, wobei unter Einsatz eines energieabsorbierenden Polymers 43 vorgegebene sicherheitstechnische Anforderungen erfüllt werden.

Gemäß Fig. 5 wird ein schaumfrei gebliebener Bereich 51 durch eine Injektion aufgefüllt. Dazu wird ein Injektionsrohr 52 durch den Schaumstoff 53 bis in diesen Bereich 51 eingebracht und dann über das Injektionsrohr 52 als Polymer 54 eine entsprechende Menge eines PUR-Gießelastomers oder eines geschmolzenen Thermoplastes eingebracht. Bei entsprechender Auswahl des Reparaturwerkstoffes mit z. B. einer an den Schaumstoff angeglichenen Härteeigenschaft läßt sich somit ein von der Oberfläche des Formteils her nicht spürbarer Übergang zum übrigen Schaumstoff erreichen.

Mit dem beschriebenen Verfahren lassen sich also auf einfache Weise Fehlstellen in hinterschäumten Formteilen vermeiden, wobei darüber hinaus noch zusätzliche vorteilhafte Eigenschaften bezüglich Härte, Steifigkeit, Eindruckfestigkeit sowie selbsttragenden Eigenschaften erreicht werden.

## Patentansprüche

1. Verfahren zur Herstellung von hinterschäumten Formteilen, wobei in eine Schäumform ein Oberflächenwerkstoff (1) eingeformt und anschließend ein Schaumstoffreaktionsgemisch eingebracht wird, dadurch gekennzeichnet, daß auf die Rückseite des Oberflächenwerkstoffes (1) an jenen Stellen, an denen sich schaumfreie Bereiche (6, 51) bilden könnten bzw. gebildet haben, zum Ausfüllen dieser Bereiche (6, 51) von der Rückseite her ein Polymer (7, 32, 43, 54) aufgebracht wird.

2. Verfahren nach Anspruch 1, dadurch gekennzeichnet, daß das Aufbringen des Polymers (7, 32, 43) vor dem Einbringen des Schaumstoffreaktionsgemisches erfolgt.

3. Verfahren nach Anspruch 1, dadurch gekennzeichnet, daß das Polymer (54) nach Einbringen und Aufschäumen des Schaumstoffreaktionsgemisches durch die Schaumstoffschicht (53) hindurch in schaumfreie Bereiche (51) des Formteils injiziert wird.

4. Verfahren nach einem der Ansprüche 1 bis 3, dadurch gekennzeichnet, daß zusätzliche Einlegeoder Verstärkungselemente (2, 3, 33) in das Polymer (7, 32) eingebracht und fixiert werden.

5. Verfahren nach einem der Ansprüche 1 bis 4, dadurch gekennzeichnet, daß als Polymer (7, 32, 43, 54) ein thermoplastischer Kunststoff eingesetzt wird.

6. Verfahren nach einem der Ansprüche 1 bis 4, dadurch gekennzeichnet, daß als Polymer (7, 32, 43, 54) ein Duromer als Reaktionskunststoff verwendet wird.

7. Verfahren nach einem der Ansprüche 1 bis 4, dadurch gekennzeichnet, daß als Polymer (7, 32, 43, 54) ein Elastomer verwendet wird.

8. Verfahren nach einem der Ansprüche 1 bis 4, dadurch gekennzeichnet, daß als Polymer (7, 32, 43, 54) ein reaktives Polyurethan-Gießelastomer eingesetzt wird.

9. Verfahren nach einem der Ansprüche 1 bis 8, dadurch gekennzeichnet, daß das Polymer (7, 32, 43, 54) in kompakter Form verwendet wird.

10. Verfahren nach einem der Ansprüche 1 bis 8, dadurch gekennzeichnet, daß das Polymer (7, 32, 43, 54) in aufschäumender Form aufgebracht wird.

11. Verfahren nach einem der Ansprüche 1 bis 10, dadurch gekennzeichnet, daß das Polymer (7, 32, 43, 54) mit einem feinteiligen Material gefüllt ist.

## Claims

1. Process for manufacturing back-foamed preforms, wherein a material (1) is molded in a foam mold and a foamed material reaction mixture is subsequently introduced, characterised in that a polymer (7, 32, 43, 54) is applied from the direction of the rear side to the rear side of the surface material (1) at those points at which unfoamed regions (6, 51) might form, or possibly have formed, in order to fill out these regions (6, 51).

2. Process according to claim 1, characterised in that the application of the polymer (7, 32, 43) takes place before the introduction of the foamed material reaction mixture.

3. Process according to claim 1, characterised in that the polymer (54) is injected through the foamed material layer (53) into unfoamed regions (51) of the preform after introduction and foaming of the foamed material reaction mixture.

4. Process according to one of claims 1 to 3, characterised in that additional inserts or strengthening elements (2, 3, 33) are introduced into the polymer (7, 32) and fixed.

5. Process according to one of claims 1 to 4, characterised in that a thermoplastic synthetic material is used as polymer (7, 32, 43, 54).

6. Process according to one of claims 1 to 4, characterised in that a duromer is used as reaction synthetic material as polymer (7, 32, 43, 54).

7. Process according to one of claims 1 to 4, characterised in that an elastomer is used as polymer (7, 32, 43, 54).

8. Process according to one of claims 1 to 4, characterised in that a reactive polyurethane casting elastomer is used as polymer (7, 32, 43, 54).

9. Process according to one of claims 1 to 8, characterised in that the polymer (7, 32, 43, 54) is used in compact form.

10. Process according to one of claims 1 to 8, characterised in that the polymer (7, 32, 43, 54) is applied in foaming form.

11. Process according to one of claims 1 to 10, characterised in that the polymer (7, 32, 43, 54) is filled with a material of fine particles.

## Revendications

1. Procédé pour fabriquer des pièces moulées comportant un remplissage de mousse ou matériau alvéolaire derrière un matériau de surface, selon lequel on drape un matériau de surface (1) dans un moule d'expansion, dans lequel on introduit ensuite un mélange réactionnel formateur de mousse, caractérisé en ce que, aux endroits ou pourraient se former, ou se sont formées, des zones (6, 51) exemptes de mousse, on applique un polymère (7, 32, 43, 54) sur le côté arrière du matériau de surface (1), afin de remplir ces zones (6, 51) depuis l'arrière.

2. Procédé selon la revendication 1, caractérisé en ce que l'on applique le polymère (7, 32, 43) avant l'introduction du mélange réactionnel.

3. Procédé selon la revendication 1, caractérisé en ce que l'on injecte le polymère (54), après l'introduction et l'expansion du mélange réactionnel, à travers la couche de mousse (53) ainsi formée, jusque dans les zones (51) exemptes de mousse de la pièce moulée.

4. Procédé selon une des revendications 1 à 3, caractérisé en ce que l'on dispose et fixe des éléments supplémentaires à insérer ou de renfort (2, 3, 33) dans le polymère (7, 32).

5. Procédé selon une des revendications 1 à 4, caractérisé en ce que l'on utilise une matière thermoplastique en tant que polymère (7, 32, 43, 54).

6. Procédé selon une des revendications 1 à 4, caractérisé en ce que l'on utilise un duromère en tant que matière synthétique réactionnelle.

7. Procédé selon une des revendications 1 à 4, caractérisé en ce que l'on utilise un élastomère en tant que polymère (7, 32, 43, 54).

8. Procédé selon une des revendications 1 à 4, caractérisé en ce que l'on utilise un élastomère de polyuréthanne à couler, élastomère qui est réactif, en tant que polymère (7, 32, 43, 54).

9. Procédé selon une des revendications 1 à 8, caractérisé en ce que l'on utilise le polymère (7, 32, 43, 54) sous forme compacte ou homogène.

10. Procédé selon une des revendications 1 à 8, caractérisé en ce que l'on applique le polymère (7, 32, 43, 54) sous forme d'un matériau formateur de mousse.

11. Procédé selon une des revendications 1 à 10, caractérisé en ce que le polymère (7, 32, 43, 54) comporte une charge finement divisée.

FIG.1

FIG.2

FIG.3

FIG. 4

FIG. 5